# EUROPEAN PATENT APPLICATION

(11) **EP 3 124 777 A1**
(43) Date of publication of application: **01.02.2017**
(21) Application number: 16181208.6
(22) Date of filing: 26.07.2016
(51) Int. Cl.: F02D 41/22, F02D 41/24, F02M 65/00, F02D 41/20

(54) **METHOD TO DETERMINE THE COKING OF A FUEL INJECTOR**

(30) Priority: 28.07.2015 GB 201513222
(71) Applicant: Delphi International Operations Luxembourg S.à r.l., 4940 Bascharage (LU)
(72) Inventor: COCHET, Thierry, 41190 Molineuf (FR); MEISSONNIER, Guillaume, 41190 Landes le Gaulois (FR); RODIER, Nicolas, 41000 Blois (FR)
(74) Representative: Delphi France SAS

(57) **Abstract**

A method to determine the level of coking in a fuel injector, said injector including a needle valve having a needle adapted to move to and from a first (closed valve) position, where the tip of the needle is in contact with a valve seat, and a second (valve open) position where the needle has moved to its furthest operational point from the valve seat, comprising measuring the duration taken for the needle to move from said first position to said second position and/or vice versa, and comparing this with at least one previous value(s).

## Description

### Field of the Invention

This disclosure relates to a method of determining the level of coking on a fuel injector.

### Background to the Invention

Fuel injectors accumulate deposits such as carbon after prolonged duration of operation and such coking can be manifested as deposits on, for example, the fuel injector nozzle orifice. The consequence of this, for example, is an effectively reduced orifice diameter, which leads to a reduction in the injected fuel quantity, under similar operating conditions i.e. without any adjustment.

Coking often appears in a non-uniform way, and can appear on the various orifices and bores present in fuel injectors, and can also lead to an unbalanced spray.

Coking is often expressed as a percentage of fuel injector flow reduction. Coking is usually less than 10%. Preferably coking levels of 3% require detection. A value of 3% can lead to a reduction of injected fuel quantity of 2mg of fuel per /stroke.

Traditionally, the usual way to test coking is to perform tests on a specially adapted rig. However this method cannot obviously be used to measure coking directly on a vehicle over its lifetime

It is an object of the invention to overcome such a limitation and provide a method of determining the level of coking in a vehicle engine in situ.

### Statement of the Invention

In one aspect is provided a method of determining the level of coking comprising A method to determine the level of coking in a fuel injector, said injector including a needle valve having a needle adapted to move to and from a first (closed valve) position, where the tip of the needle is in contact with a valve seat, and a second (valve open) position where the needle has moved to its furthest operational point from the valve seat, comprising measuring the duration taken for the needle to move from said first position to said second position and/or vice versa, and comparing this with at least one previous value(s).

The needle may be adapted to rise from said first closed position to said second open position in a time period corresponding to a needle rising duration, and fall from said second position to said first position in a time period corresponding to a needle fall duration.

The needle may be adapted to abut against a stop at said second position.

The duration may be determined from a switch signal.

The duration may be determined from the width of pulses generated by said switch signal.

The durations may be determined from analysing characteristics of one or more of the following: accelerometer sensor signals, drive current signals.

The method may include determining a ratio of the currently determined duration(s) with previous stored or computed values thereof.

The coking level may be determined by relating said duration(s) or ratio(s) with stored value(s) of coking levels.

The relationship may stored as a map.

The method may be performed at set or pre-determined engine or fuel injector operating conditions.

### Brief Description of Drawings

The invention will now be described by way of example and with reference to the following drawings of which:
Figure 1 shows the circuitry of a fuel injector systems which includes a switch signal (line).
Figure 2 shows the time line of actuator current fuel delivery rate and switch signal.
Figure 3 shows the electrical connectivity of the switch signal circuit at various stages of operation (valve opening and closing)
Figure 4 shows plots of injector drive current and the corresponding plots of fuel quantity delivered and the needle switch signal for a fuel injector before and after coking.

### Detailed Description of the Invention

In one aspect the coking level is determined by analysing needle events and in particular the duration of needle rising and/or falling periods i.e. duration. These can be measured in one example from the (e.g. needle) switch signal on e.g. a main injection under certain conditions.

Many fuel injectors now include functionality where a switch signal is provided by means of additional wire and appropriate insulation within the injector such that valve opening and closing events can be detected. Typically the wiring and insulation provided is such that movement of valve parts (such as the needle) can be determined by virtue of changes in electrical continuity and connectivity with ground as a result of contact non-contact of moving parts.

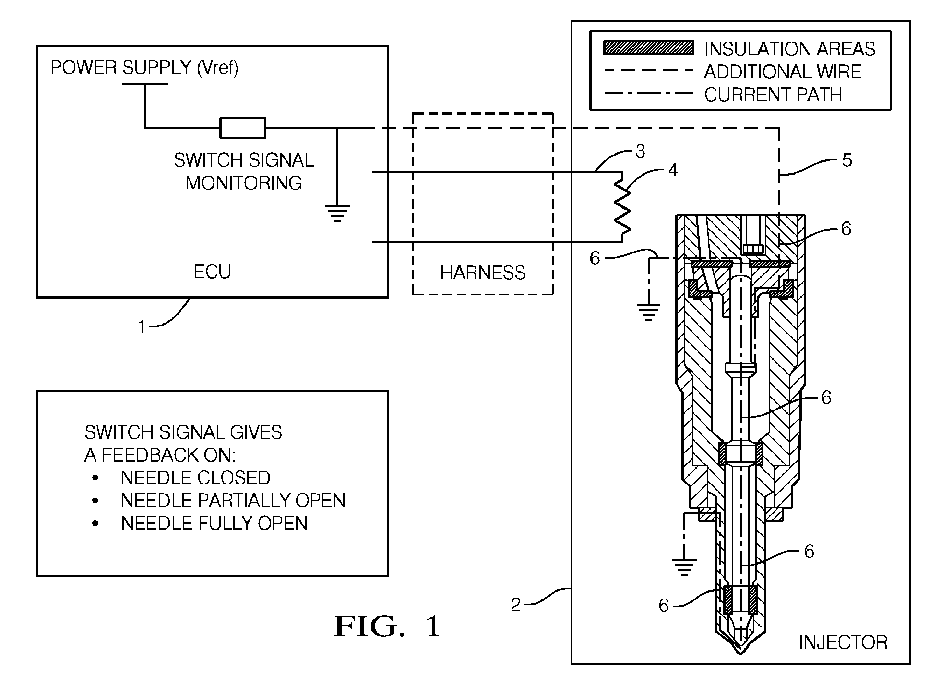

Figure 1 shows the circuitry of a fuel injector system which includes a switch signal (line). Specifically it shows a circuit diagram of connections from an ECU 1 to an electrically actuated (e.g. solenoid or Piezo) fuel injector 2. The ECU controls an actuator drive pulse via leads 3 to an actuator 4 of the injector shown schematically. The actuator controls opening of a valve such as a needle valve. In addition is provided a switch signal line shown as wire 5, and which provide currents via paths 6 to ground as shows in the figure. Insulation is provided appropriately Movement of the electronic actuator/valve components cause the switch signal to vary dependent on the actuation state of the electrical actuator or valve.

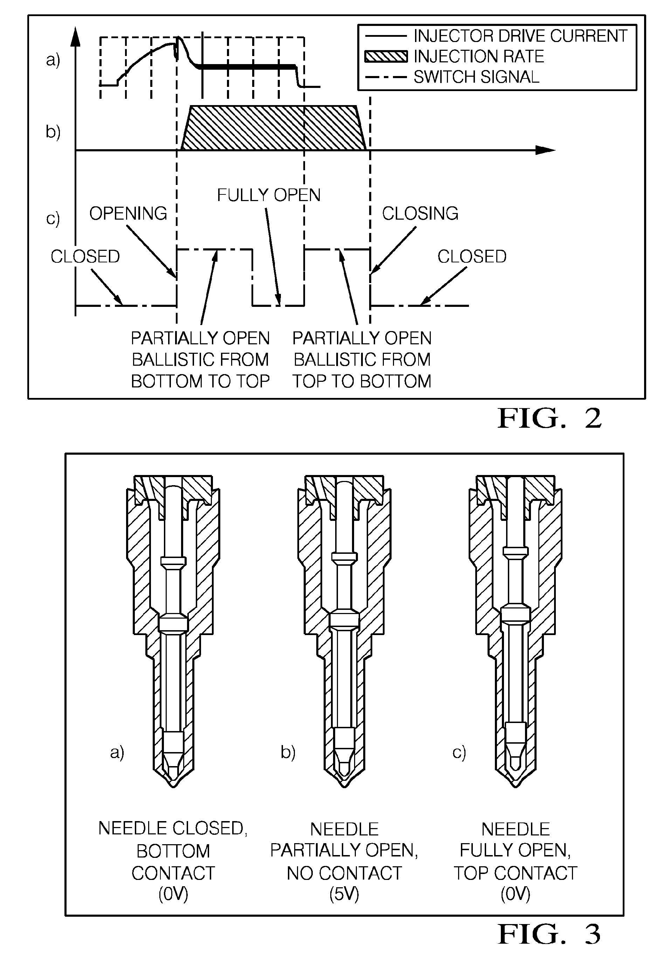

Figure 2 shows the time line of actuator current, fuel delivery rate and switch signal. Figure 2a shows a typical electrical actuator drive current 7 along with the injection rate 8 in figure 2b. Figure 2c shows the corresponding switch signal which according to one example of the invention is monitored.

When the (needle) valve is closed the switch signal is zero as the valve is in a state where the wire 5 for switch signal is in electrical contact with ground - see figure 3a. Thereafter when the valve starts to open the switch signal steps from low (zero) to high as the valve opening closes (insulates) the path from the wore 5 to ground as shows in figure 3b. When the valve is fully open the top portion of the needle hitting a stop causes the current form the switch signal to be connected to ground and the switch signal reduces to zero see figure 3c. The terms "closed"/"open", "needle closed"/"needle open" in the figures refers to the state of a needle valve.

In other words needle valve operated injectors usually have a lift stop, that is to say when the needle rises, the tip (distal portion) of the needle moves away from a valve seat to allow fuel to be dispensed and then, where a valve has a "lift stop", an end point is reached where (e.g. the proximal end of) the needle abuts an effective mechanical stop. This is referred to as the rise. The "rise period" is the time taken between the needle moving away from the valve seat to reaching the lift stop. Conversely when closing the valve, the needle moves from the lift stop position to a point when the tip (distal end) of the needle abuts against the valve seat, so as to close the valve. The period taken between the needles moving away from the lift stop to the closed valve position is referred to as the falling period/duration.

Various parameters affect the rise and fall periods; these can depend on the operating parameters or inherent characteristics of the individual injector. The parameters may be the level of coking as well as rail pressure, boost flange clearance or Nozzle Path Orifice (NPO) diameter. It has been found that generally coking reduces needle rising duration and increases needle falling duration (i.e. compared to a new injector). Thus according to simple examples the method comprises determining long-term changes in the rising and/or falling durations.

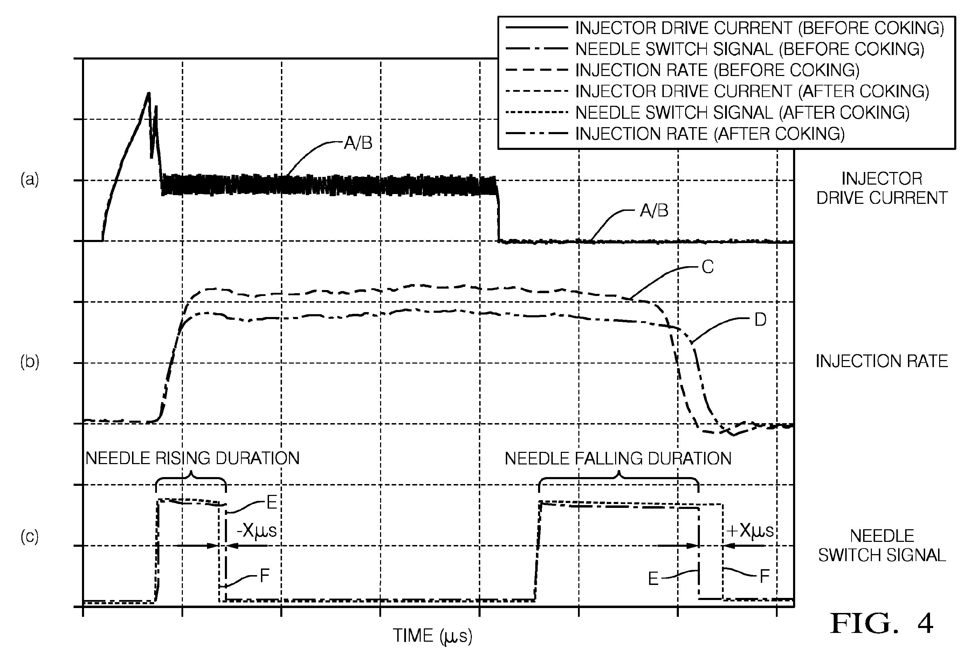

Figure 4a shows plots of the injector drive current signal before and after coking (A and B respectively they are generally the same). Figure 4b shows plots of the resulting injection rate before and after coking (C and D respectively). And figure 4c shows equivalent needle switch signals and illustrates changes thereof before and after coking (E and F respectively).

A drive (actuation) pulse from e.g. an ECU to an injector, typically leads to actuation of e.g. a solenoid or Piezo actuator which in turn, (either directly or indirectly) moves a valve needle from a valve seat. The drive current is typically held at a lower level than initially during a "hold phase" to keep the valve in the open position e.g. keep the needle away from the valve seat. The fuel is injected generally from the time the needle starts to move away from the seat (after the actuation (drive) signal), until a short time after the actuation signal falls to zero, and the valve starts to close.

The bottom plots show the needle switch signal, which effectively indicates when the needle lifts from the seat and hits the top stop i.e. the lift stop, and vice versa. In other words the signal widths are equivalent to the rise and falling periods.

As can be seen, the needle rising duration is reduced, and the needle falling duration is increased, consequent to coking.

Thus in basic embodiments, the needle rising and falling durations are measured. Preferably this is done under similar conditions of temperature and pressure, as for the same type of pulse (main or pilot injection), fuel quantity demand and such like.

The rising and fall durations can be measured / determined from the switch signal.

Alternatively the rise and fall durations can be determined from analysis of other signals such as signals form vibration sensors (accelerometers).

Alternatively the injector coil drive voltage may be analysed to determine the start of needle fall duration. Actuator valve will generate effectively a back EMF when it closes. The actuator valve closing time can be determined from characteristics of the drive pulse such as point of inflection, (glitches). From actuator valve closing, start of needle fall can be deduced with a delay. And thanks to switch needle closing information, needle fall duration can be deduced to estimate coking.

The needle rising and falling durations when the injector is new, can be stored locally i.e. as a map in the engine ECU. Alternatively the durations can be determined by the above methodology at previous time points.

Over time, e.g. at intervals the needle rising and falling durations can be monitored and compared with the original or earlier values to determine the level of coking.

The needle rising or falling durations may be compared by determining the ratio of these values i.e. the ratio of the rising/falling duration currently determined by the above methodology compared with originally stored values or values determined by the above methodology at earlier time point. The values of the durations or the ratios this determined may be related i.e. correlated to coking levels, e.g. from historic or other known data. The correlation may be stored e.g. in the ECU as a map.

If the coking level (or durations/ratios) are greater than a predetermined amount, then a coking warning/diagnostic signals can be generated.

Additionally or alternatively, the engine operating conditions may be adapted to compensate for the cooking level e.g. by adjusting the drive pulse e.g. extending the pulse time.

## Claims

1. A method to determine the level of coking in a fuel injector, said injector including a needle valve having a needle adapted to move to and from a first (closed valve) position, where the tip of the needle is in contact with a valve seat, and a second (valve open) position where the needle has moved to its furthest operational point from the valve seat, comprising measuring the duration taken for the needle to move from said first position to said second position and/or vice versa, and comparing this with at least one previous value(s).

2. A method as claimed in claim 1 wherein said needle is adapted to rise from said first closed position to said second open position in a time period corresponding to a needle rising duration, and fall from said second position to said first position in a time period corresponding to a needle fall duration.

3. A method as claimed in claim 1 or 2 wherein said needle is adapted to abut against a stop at said second position.

4. A method as claimed in claims 1 to 3 wherein said duration is determined from a switch signal.

5. A method as claimed in claim 4 wherein said duration is determined from the width of pulses generated by said switch signal.

6. A method as claimed in claim 1 to 3 wherein said durations are determined from analysing characteristics of one or more of the following: accelerometer sensor signals, drive current signals.

7. A method as claimed in any previous claim including determining a ratio of the currently determined duration(s) with previous stored or computed values thereof.

8. A method as claimed in any previous claim 7 wherein said coking level is determined by relating said duration(s) or ratio(s) with stored value(s) of coking levels.

9. A method as claimed in claim 8 where said relationship is stored as a map.

10. A method as claimed in claims 1 to 9 wherein said method is performed at set or pre-determined engine or fuel injector operating conditions.

11. A method as claimed in claims 1 to 10 where the level of coking is determined based on both the valve opening and closing durations.

12. A method as claimed in claim11 where the level of coking is based on the average of a parameter of the level of coking found from the closing duration and a parameter of the level of coking found from the opening duration.
